# EUROPÄISCHE PATENTANMELDUNG

(11) **EP 2 983 278 A1**
(43) Veröffentlichungstag der Anmeldung: **10.02.2016**
(21) Anmeldenummer: 14179836.3
(22) Anmeldetag: 05.08.2014
(51) Int. Cl.: H02K 5/136, H02K 5/15, H02K 5/173, H02K 1/18, H02K 15/02, H02K 15/16

(54) **Druckfest gekapselte elektrische Maschine**

(71) Anmelder: Siemens Aktiengesellschaft, 80333 München (DE)
(72) Erfinder: Brandl, Konrad, 93107 Thalmassing (DE); Joseph, Eric, 90489 Nürnberg (DE); Scharf, Uwe, 90763 Fürth (DE)

(57) **Zusammenfassung**

Die Erfindung betrifft eine druckfest gekapselte elektrische Maschine (1,92,93,100, 101), umfassend eine druckfeste Kapselungsvorrichtung (2,200,202,213,224), und ein Blechpaket (8,71,80,81), wobei das Blechpaket (8,71,80,81) in einer axialen Richtung (3) geschichtete Bleche (7,710,711,712) aufweist, wobei das Blechpaket (8,71,80,81) einen ersten Abschnitt (21,205,210,214,221) der druckfesten Kapselungsvorrichtung (2,200,202,213,224) bildet, wobei das Blechpaket (8,71,80,81) eine Verbindungsvorrichtung (29,290) aufweist, die die Bleche (7,710,711,712) im Blechpaket (8,71,80,81) fixiert, wobei jeweils in axialer Richtung (3) benachbarte Bleche (7,710,711,712) durch einen Backlack (10) miteinander verklebt sind, ein Verfahren zur Herstellung einer druckfest gekapselten elektrischen Maschine (1,92,93,100,101), wobei die druckfeste Kapselungsvorrichtung (2,200,202,213,214) mit dem Blechpaket (8,71,80,81) als ersten Abschnitt (21,205,210, 214,221) hergestellt wird, eine Verwendung eines Backlackes (10) zur druckfesten Kapselung einer druckfest gekapselten elektrischen Maschine (1,92,93,100,101), wobei jeweils in axialer Richtung (3) benachbarte Bleche (7,710,711,712) für den ersten Abschnitt (21,205,210,214,221) der druckfesten Kapselungsvorrichtung (2,200,202,213,224) mit einem Backlack (10) miteinander verklebt werden, sowie eine Verwendung von in axialer Richtung (3) benachbarten mit Backlack (10) verklebten Blechen (7,710,711,712) zur druckfesten Kapselung einer druckfest gekapselten elektrischen Maschine (1,92,93,100, 101), wobei die verklebten Bleche (7,710,711,712) für den ersten Abschnitt (21,205,210,214,221) der druckfesten Kapselungsvorrichtung (2,200,202,213,224) verwendet werden.

## Beschreibung

Die Erfindung betrifft eine druckfest gekapselte elektrische Maschine. Weiterhin betrifft die Erfindung ein Verfahren zur Herstellung der druckfest gekapselten elektrischen Maschine, eine Verwendung eines Backlacks zur druckfesten Kapselung der druckfest gekapselten elektrischen Maschine, sowie eine Verwendung von in axialer Richtung benachbarten durch einen Backlack miteinander verklebten Bleche zur druckfesten Kapselung der druckfest gekapselten elektrischen Maschine.

Eine druckfest gekapselte elektrische Maschine ist ein elektrisches Betriebsmittel für einen Einsatz in explosionsgefährdeten Bereichen. Die Brochüre "Produkte und Systeme für den Einsatz in explosionsgefährdeten Bereichen" der Siemens AG, z.B. die Ausgabe November 2010, enthält einen Überblick über den Explosionsschutz in Zusammenhang mit elektrischen Betriebsmitteln und Anlagen. Für die Planung und Errichtung von elektrischen Anlagen ist es notwendig, die jeweiligen Grundlagen und Richtlinien sowie die rechtlichen Grundlagen und Normen zu studieren. In der genannten Brochüre wird auch auf druckfeste gekapselte elektrischer Betriebsmittel eingegangen und es werden beispielhaft Standards, d.h. Normen, Richtlinien und weitere rechtliche Grundlagen beispielhaft angegeben. So wird bei einer druckfesten Kapselung z.B. die Norm IEC 60079-1 und EG-Richtlinie 94/9/EG angegeben und deren Anforderungen im Überblick angesprochen.

Weiterhin ist eine druckfest gekapselte elektrische Maschine aus der US 2007/0159018 A1 als explosionsgeschützter Motor bekannt. Es wird dort ein explosionsgeschützter Motor beschrieben, der eine druckfeste Kapselungsvorrichtung mit Flammenpfaden zwischen den verschiedenen Verbindungen in der druckfesten Kapselungsvorrichtung aufweist. In der genannten Veröffentlichung bezieht sich ein Flammenpfad auf eine Verbindung zwischen zwei Komponenten in einem Motorgehäuse, die ausreichend eng und ausreichend lang ist, so dass es unwahrscheinlich ist, dass eine Explosion innerhalb des Motorgehäuses durch die Verbindung sich in der Umgebung ausbreiten kann. Die druckfeste Kapselungsvorrichtung gemäß der Veröffentlichung umfasst ein Blechpaket, an dessen axialen Enden jeweils ein Endring und ein Lagerschild als Bestandteil der druckfesten Kapselungsvorrichtung befestigt sind. Zwischen den Endringen und den Lagerschilden sind Flammenpfade vorhanden, die eine erweiterte Länge und eine Breite in bestimmten Grenzen aufweisen. Die Flammenpfade können so die Wahrscheinlichkeit reduzieren, dass ein heißes Gas oder eine Flamme nach einer Entladung innerhalb des druckfest gekapselten Motors diesen verlassen, und/oder diese Gase oder Flammen kühlen in den Flammenpfaden ab, bevor sie den druckfesten Motor verlassen. Das Blechpaket weist Zuganker auf, die das Blechpaket in einem zusammengepressten Zustand halten. Es können hierfür auch andere Techniken verwendet werden, um das Blechpaket als dichte Einheit zu erhalten. Im zusammengepressten Zustand wird das Blechpaket kugelgestrahlt oder kaltverformt, um die Bleche miteinander zu verschmelzen. Dies reduziert die Wahrscheinlichkeit, dass ein heißes Gas oder eine Flamme aus dem druckfesten Motor entweichen kann, wenn in diesem ein Entladungsereignis auftritt.

Der vorliegenden Erfindung liegt die Aufgabe zugrunde, einen technischen Beitrag für eine druckfest gekapselte elektrische Maschine zu leisten, mit dem eine druckfest gekapselte elektrische Maschine kostengünstig und in hoher Qualität zur Verfügung gestellt werden kann.

Die Aufgabe wird durch eine druckfest gekapselte elektrische Maschine mit den Merkmalen des Anspruchs 1 gelöst.

Eine erfindungsgemäße druckfest gekapselte elektrische Maschine umfasst
- eine druckfeste Kapselungsvorrichtung, und
- ein Blechpaket,
- wobei das Blechpaket in einer axialen Richtung geschichtete Bleche aufweist,
- wobei das Blechpaket einen ersten Abschnitt der druckfesten Kapselungsvorrichtung bildet,
- wobei das Blechpaket eine Verbindungsvorrichtung aufweist, die die Bleche im Blechpaket fixiert,
- wobei jeweils in axialer Richtung benachbarte Bleche durch einen Backlack miteinander verklebt sind.

Die Aufgabe wird auch durch ein Verfahren zur Herstellung einer erfindungsgemäßen elektrischen Maschine mit den Merkmalen nach Anspruch 13 gelöst. Bei einem erfindungsgemäßen Verfahren zur Herstellung einer erfindungsgemäßen elektrischen Maschine wird die druckfeste Kapselungsvorrichtung mit dem Blechpaket als erstem Abschnitt hergestellt.

Die Aufgabe wird auch durch eine Verwendung eines Backlacks zur druckfesten Kapselung einer erfindungsgemäßen elektrischen Maschine mit den Merkmalen nach Anspruch 14 gelöst. Bei einer erfindungsgemäßen Verwendung eines Backlacks zur druckfesten Kapselung einer erfindungsgemäßen elektrischen Maschine werden jeweils in axialer Richtung benachbarte Bleche für den ersten Abschnitt der druckfesten Kapselungsvorrichtung mit einem Backlack miteinander verklebt.

Ferner wird die Aufgabe durch eine Verwendung von in axialer Richtung benachbarten durch einen Backlack miteinander verklebten Bleche zur druckfesten Kapselung einer erfindungsgemäßen elektrischen Maschine mit den Merkmalen nach Anspruch 15 gelöst. Bei einer erfindungsgemäßen Verwendung von in axialer Richtung benachbarten durch einen Backlack miteinander verklebten Blechen zur druckfesten Kapselung einer erfindungsgemäßen elektrischen Maschine werden die verklebten Bleche für den ersten Abschnitt der druckfesten Kapselungsvorrichtung verwendet.

Die Aufgabe wird erfindungsgemäß vorteilhaft gelöst, indem durch den Backlack und die Verbindungsvorrichtung bei einer druckfest gekapselten elektrischen Maschine Spalte und Risse im Blechpaket vorteilhaft vermieden werden. So können Bleche vorteilhaft unabhängig von Anforderungen an Spaltlängen zwischen den Blechen bei druckfest gekapselten Maschinen ausgeführt werden. Vorteilhaft kann eine erfindungsgemäße elektrische Maschine die Anforderungen der IEC 60079-1 oder vergleichbarer Normen erfüllen. Weiterhin vorteilhaft kann das Blechpaket eine Strömungsvorrichtung zur Kühlung einer erfindungsgemäßen elektrischen Maschine aufweisen, wobei die Strömungsvorrichtung Ausnehmungen an einer äußeren Oberfläche des Blechpakets aufweist. Die an den Blechen vorhandenen Ausnehmungen sind vorteilhaft keine Behinderung für ein kostengünstiges Zur-Verfügung-stellen einer druckfest gekapselten elektrischen Maschine in einer hohen Qualität.

Vorteilhaft kann eine erfindungsgemäße elektrische Maschine innerhalb der druckfesten Kapselungsvorrichtung einen Rotor aufweisen, der über einen Luftspalt magnetisch mit dem Blechpaket zusammenwirkt um zwei verschiedene Energieformen ineinander umzuwandeln.

Ein erfindungsgemäßes Verfahren zur Herstellung einer erfindungsgemäßen elektrischen Maschine weist den weiteren Vorteil auf, dass die druckfest gekapselte elektrische Maschine vorteilhaft kostengünstig hergestellt in einer hohen Qualität zur Verfügung gestellt werden kann. Es muss z.B. vorteilhaft kein zusätzlicher Herstellungsprozess zum Verschmelzen der Bleche vorhanden sein. Unter anderem kann daher auch eine Strömungsvorrichtung vorteilhaft für eine Kühlung einer erfindungsgemäßen elektrischen Maschine vorteilhafte Ausnehmungen an einer äußeren Oberfläche des Blechpakets aufweisen, ohne für den fehlenden zusätzlichen Herstellungsprozess hinderlich zu sein.

Eine erfindungsgemäße Verwendung des Backlacks weist den weiteren Vorteil auf, dass er als Material, das kostengünstig in großen Mengen verfügbar ist, und bei dem große Erfahrung in der Verarbeitbarkeit vorhanden ist, vorteilhaft kostengünstig in einer hohen Qualiät zu einer druckfest gekapselten elektrischen Maschine beitragen kann. So kann vorteilhaft kostengünstig in einer hohen Qualität jeweils in axialer Richtung benachbarte Bleche durch einen handelsüblichen Backlack zwischen den benachbarten Blechen durch Erhitzen, z.B. über 100 °C, miteinander verklebt werden. Handelsübliche Backlacke weisen als Basismaterial z.B. Polyvinylbutyrale, Polyamide, Polyester oder Modifikationen dieser Stoffgruppen auf.

Eine erfindungsgemäße Verwendung der in axialer Richtung benachbarten durch den Backlack miteinander verklebten Bleche weist den weiteren Vorteil auf, dass ein Abschnitt der druckfest gekapselten Maschine vorteilhaft kostengünstig in einer hohen Qualität zur Verfügung gestellt werden kann.

Vorteilhafte Ausgestaltungen der Erfindung sind in den abhängigen Ansprüchen angegeben.

So ist eine Ausgestaltung einer erfindungsgemäßen elektrischen Maschine vorteilhaft, bei der die Verbindungsvorrichtung aus Schweißnähten besteht. So kann in einem explosionsgefährdeten Bereich mit geringeren Anforderungen, die z.B. durch eine Explosionsgruppe der IEC 60079 für eine elektrische Maschine vorgeschrieben sind, das Blechpaket vorteilhaft kostengünstig in einer hohen Qualität den ersten Abschnitt der druckfesten Kapselungsvorrichtung bilden. Es können vorteilhaft die Schweißnähte an der äußeren Oberfläche des Blechpakets vorhanden sein.

In einer weiteren vorteilhaften Ausgestaltung einer erfindungsgemäßen elektrischen Maschine weist die Verbindungsvorrichtung ein Versteifungselement auf. So kann vorteilhaft eine Spaltbreite des Luftspalts zwischen Rotor und Stator über eine Länge des Luftspalts in der axialen Richtung in einer hohen Qualität kostengünstig eingehalten werden und das Blechpaket kann vorteilhaft der erste Abschnitt der druckfesten Kapselungsvorrichtung sein, insbesondere bei einem Einsatz in explosionsgefährdeten Bereichen mit höheren Anforderungen, die z.B. durch eine Explosionsgruppe der IEC 60079 für eine elektrische Maschine vorgeschrieben sind. Beispiele für Versteifungselemente, die in axialer Richtung verlaufend zum Fixieren der Bleche im Blechpaket beitragen, sind Zuganker oder Klammern.

In einer weiteren vorteilhaften Ausgestaltung einer erfindungsgemäßen elektrischen Maschine weist ein zweiter Abschnitt der druckfesten Kapselungsvorrichtung ein erstes Schutzrohr auf, und ein dritter Abschnitt der druckfesten Kapselungsvorrichtung weist ein zweites Schutzrohr auf. So können vorteilhaft kostengünstig in einer hohen Qualität das erste Schutzrohr und das zweite Schutzrohr Wicklungsköpfe einer erfindungsgemäßen elektrischen Maschine vor Umwelteinflüssen schützen und einen Teil des zweiten bzw. des dritten Abschnitts der druckfesten Kapselungsvorrichtung bilden.

In einer weiteren vorteilhaften Ausgestaltung einer erfindungsgemäßen elektrischen Maschine weist diese einen Rotor auf, der sich in einem Betrieb der elektrischen Maschine um eine Drehachse dreht, wobei die Drehachse durch einen Durchgang des ersten Schutzrohrs verläuft, wobei sich der Rotor außerhalb des Durchgangs abstützt. So kann vorteilhaft kostengünstig in einer hohen Qualität der Durchgang für eine druckfeste Kapselungsvorrichtung einer erfindungsgemäßen elektrischen Maschine mit den dafür notwendigen Spaltlängen und Spaltweiten ausgeführt werden, wobei vorteilhaft keine Konstruktionselemente für eine Abstützung z.B. einer Welle oder Achse bei der Dimensionierung des Durchgangs berücksichtigt werden müssen.

Es können eine Welle oder Achse, das erste Schutzrohr, ein Blechpaket mit oder ohne Endring und das zweite Schutzrohr mit den entsprechenden Verbindungselementen die Kapselungsvorrichtung bilden. So kann vorteilhaft kostengünstig in einer hohen Qualität auf ein geschlossenes druckfestes Gehäuse vorteilhaft verzichtet werden.

In einer weiteren vorteilhaften Ausgestaltung einer erfindungsgemäßen elektrischen Maschine umfasst ein erstes Lagerschild das erste Schutzrohr und eine erste Lagervorrichtung. So kann vorteilhaft kostengünstig in einer hohen Qualität eine erfindungsgemäße elektrische Maschine zur Verfügung gestellt werden, die eine druckfeste Kapselungsvorrichtung mit einer ersten Lagervorrichtung für eine Lagerung umfasst.

In einer weiteren vorteilhaften Ausgestaltung einer erfindungsgemäßen elektrischen Maschine weist das erste Lagerschild eine Zentriervorrichtung zum Einstellen von Spalten am Durchgang auf. So kann vorteilhaft kostengünstig in einer hohen Qualität durch ein Befestigen des ersten Lagerschildes und gegebenenfalls eines zweiten Lagerschildes eine druckfeste Kapselung einer erfindungsgemäßen elektrischen Maschine vorteilhaft erreicht werden. Beim Aufsetzen des ersten Lagerschildes und Befestigen des ersten Lagerschildes nimmt das erste Lagerschild eine durch die Zentriervorrichtung vorgegebene Position ein, so dass sich die notwendigen Maße der Spalte vorteilhaft für eine druckfeste Kapselung einstellen.

In einer weiteren vorteilhaften Ausgestaltung einer erfindungsgemäßen elektrischen Maschine weist die druckfeste Kapselungsvorrichtung eine Fixiervorrichtung auf, wobei das Blechpaket sich in einem Betrieb der elektrischen Maschine über die Fixiervorrichtung abstützt, wobei die Fixiervorrichtung eine Einstellvorrichtung aufweist. So kann vorteilhaft kostengünstig in einer hohen Qualität die Einstellvorrichtung zum Einstellen von Spalten an einem Durchgang eines zweiten Abschnitts der druckfesten Kapselungsvorrichtung verwendet werden. Der zweite Abschnitt befindet sich an einem axialen Ende des Blechpakets.

Bei einer elektrischen Maschine, bei der eine erste Lagervorrichtung nicht an dem zweiten Abschnitt, insbesondere einem ersten Schutzrohr, befestigt ist, z.B. bei einer elektrischen Maschine gemäß der Patentanmeldung mit dem internationalen Aktenzeichen PCT/EP2014/053023, kann zum Einstellen von Spalten an dem Durchgang vorteilhaft kostengünstig in einer hohen Qualität die Einstellvorrichtung zum Einstellen des Luftspalts durch ein Verändern der Position eines an einem Rahmen fixierten Stators gegenüber dem Rahmen verwendet werden.

In einer weiteren vorteilhaften Ausgestaltung einer erfindungsgemäßen elektrischen Maschine weist das erste Schutzrohr eine Einstellvorrichtung zum Einstellen von Spalten am Durchgang auf. So können vorteilhaft kostengünstig in einer hohen Qualität die Spalte bei einer vorhandenen Welle oder Achse am Durchgang eingestellt werden.

In einer weiteren vorteilhaften Ausgestaltung einer erfindungsgemäßen elektrischen Maschine weist das erste Schutzrohr eine Dichtvorrichtung auf, wobei die Dichtvorrichtung den Durchgang aufweist, wobei die Dichtvorrichtung eine Einstellvorrichtung zum Einstellen von Spalten am Durchgang aufweist. So können vorteilhaft kostengünstig in einer hohen Qualität die Spalte bei vorhandener Welle oder Achse im Durchgang an der Dichtvorrichtung eingestellt werden.

Unter anderem kann die Dichtvorrichtung eine geringere Masse und/oder geringeres Volumen als das gesamte erste Schutzrohr aufweisen. So können vorteilhaft kostengünstig und in hoher Qualität mit geringem Aufwand die Spalte bei vorhandener Welle oder Achse im Durchgang an der Dichtvorrichtung eingestellt werden.

Das erste Schutzrohr kann an seinem ersten axialen Ende, das von dem Blechpaket abgewandt ist, eine axiale Berandung aufweisen, die sich in radialen Richtungen zum Durchgang erstreckt, wobei die Dichtvorrichtung einen Teil der axialen Berandung bildet. So können vorteilhaft kostengünstig in einer hohen Qualität die Spalte bei vorhandener Welle oder Achse im Durchgang an der Dichtvorrichtung in einfacher Weise zugänglich an einem ersten axialen Ende der druckfesten Kapselungsvorrichtung an einer axialen Berandung eingestellt werden.

In einer weiteren vorteilhaften Ausgestaltung einer erfindungsgemäßen elektrischen Maschine weist die erste Lagervorrichtung eine Einstellvorrichtung zum Positionieren des Lagers relativ zur Drehachse auf. So kann vorteilhaft kostengünstig in einer hohen Qualität das Lager an einer druckfest gekapselten elektrischen Maschine befestigt werden. Vorteilhaft kostengünstig kann in einer hohen Qualität die Positionierung des Lagers relativ zur Drehachse vorteilhaft unabhängiger von den Anforderungen an die druckfeste Kapselungsvorrichtung einer erfindungsgemäßen elektrischen Maschine vorgenommen werden.

In einer weiteren vorteilhaften Ausgestaltung einer erfindungsgemäßen elektrischen Maschine umfasst die elektrische Maschine eine Hülle, die eine Vorrichtung aufweist, wobei die Vorrichtung die druckfeste Kapselungsvorrichtung zumindest teilweise umgibt. So kann vorteilhaft kostengünstig in hoher Qualität eine druckfest gekapselte elektrische Maschine zur Verfügung gestellt werden, indem anstelle einer zusammengesetzten Einheit, die den Stator und den Rotor umfasst, eine zusammengesetzte Einheit mit der Kapselungsvorrichtung in die elektrische Maschine mit der Hülle eingesetzt wird. Es kann so vorteilhaft kostengünstig in hoher Qualität eine druckfest gekapselte elektrische Maschine zur Verfügung gestellt werden, die nahezu die gleichen Anforderungen an einen Aufstellort stellt, wie die nicht druckfest gekapselte elektrische Maschine mit der Hülle.

Vorteilhafte Ausgestaltungen erfindungsgemäßer elektrischer Maschinen, erfindungsgemäßer Verfahren zur Herstellung einer erfindungsgemäßen elektrischen Maschine, erfindungsgemäßer Verwendungen eines Backlacks, sowie erfindungsgemäßer Verwendungen von in axialer Richtung benachbarten durch einen Backlack miteinander verklebten Bleche ergeben sich vorteilhaft durch Kombination einiger oder mehrerer beschriebener Merkmale.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein erstes Ausführungsbeispiel einer druckfest gekapselten elektrischen Maschine,
- FIG 2: ein zweites Ausführungsbeispiel einer druckfest gekapselten elektrischen Maschine,
- FIG 3: ein drittes Ausführungsbeispiel einer druckfest gekapselten elektrischen Maschine,
- FIG 4: ein viertes Ausführungsbeispiel einer druckfest gekapselten elektrischen Maschine, und
- FIG 5: ein fünftes Ausführungsbeispiel einer druckfest gekapselten elektrischen Maschine.

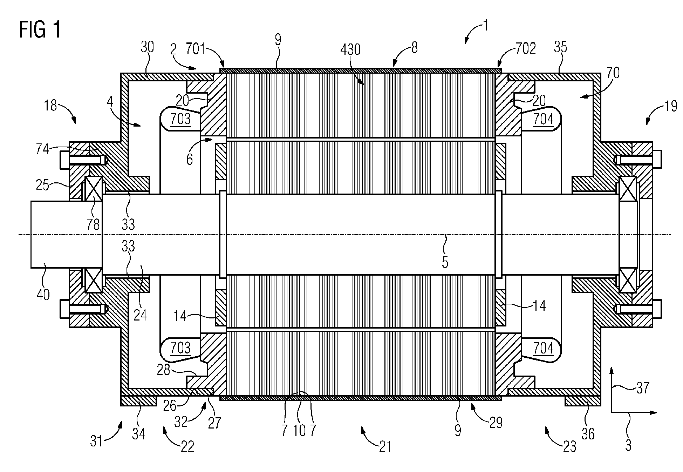

FIG 1 zeigt ein erstes Ausführungsbeispiel einer druckfest gekapselten elektrischen Maschine 1, die eine druckfeste Kapselvorrichtung 2 und ein Blechpaket 8 umfasst. Das Blechpaket 8 weist in einer axialen Richtung 3 geschichtete Bleche 7 auf, wobei es einen ersten Abschnitt 21 der druckfesten Kapselungsvorrichtung 2 bildet. Das Blechpaket 8 weist eine Verbindungsvorrichtung 29 auf, die die Bleche 7 fixiert, wobei jeweils in axialer Richtung 3 benachbarte Bleche 7 durch einen Backlack 7 miteinander verklebt sind. In dem Ausführungsbeispiel der Figur 1 besteht die Verbindungsvorrichtung 29 aus Schweißnähten 9. So kann in einem explosionsgefährdeten Bereich mit geringen Anforderungen, z.B. die, die einer Explosionsgruppe IIA der IEC 60079 entsprechen, das Blechpaket 8 vorteilhaft den ersten Abschnitt 21 der druckfesten Kapselungsvorrichtung 2 bilden. Die Schweißnähte 9 sind an der äußeren Oberfläche 430 des Blechpakets 8 vorhanden. In dem Ausführungsbeispiel der FIG 1 sind alle Bleche 7 des Blechpakets 8 durch einen handelsüblichen Backlack des Backlacktyps QT zwischen benachbarten Blechen 7 durch Erhitzen auf eine Temperatur über 200°C miteinander verklebt worden. Der Backlacktyp QT weist als Basismaterial ein modifiziertes Polyamid auf.

Die elektrische Maschine 1 gemäß dem Ausführungsbeispiel der FIG 1 weist innerhalb der druckfesten Kapselungsvorrichtung 2 einen Rotor 4 auf, der über einen Luftspalt 6 magnetisch mit dem Blechpaket 8 zusammenwirkt, um zwei verschiedene Energieformen ineinander umzuwandeln. Der Rotor 4 weist eine Welle 40 auf, mit der er um eine Drehachse 5 in einer ersten und einer zweiten Lagervorrichtung 18, 19 drehbar gelagert ist. Die Drehachse 5 verläuft in der axialen Richtung 3. Die elektrische Maschine 1 umfasst weiterhin einen Stator 70, der sich entlang der Drehachse 5 von einem ersten axialen Ende 701 zu einem zweiten axialen Ende 702 erstreckt und in einem Betrieb der elektrischen Maschine 1 über den Luftspalt 6 mit dem Rotor 4 zusammenwirkt. Im Betrieb der elektrischen Maschine 1 werden zwei verschiedene Energieformen, und zwar mechanische und elektrische Energie, ineinander umgewandelt. Der Stator 70 weist das Blechpaket 8 auf. An dem ersten und am zweiten axialen Ende 701 und 702 sind Wicklungsköpfe 703, 704 angeordnet, die Bestandteil von Wicklungen sind, die am Stator 70 befestigt sind und von dem ersten zum zweiten axialen Ende 701, 702 verlaufen. Der Rotor 4 weist eine Einrichtung auf, um über den Luftspalt 6 mit dem Stator 70, insbesondere mit den dort befestigten Wicklungen, magnetisch zusammenwirken zu können. In dem Ausführungsbeispiel der FIG 1 weist die Einrichtung Stäbe auf, die in der axialen Richtung 3 durch ein Blechpaket 8 des Rotors 4 verlaufen und an den beiden axialen Enden des Blechpakets jeweils durch einen Kurzschlussring 14 kurzgeschlossen sind. Der Rotor 4 gemäß dem Ausführungsbeispiel der FIG 1 ist somit ein Käfigläufer.

An den beiden axialen Enden 701 und 702 sind jeweils Endringe 20 angeordnet, die über die Schweißnähte 9 mit dem Blechpaket 8 verbunden sind. In dem Ausführungsbeispiel der FIG 1 weisen die Bleche 7 und die Endringe 20 in der axialen Richtung 3 gesehen einen eckigen Querschnitt auf. Der eckige Querschnitt ist näherungsweise ein Quadrat. Ein zweiter Abschnitt 22 der druckfesten Kapselungsvorrichtung 2 weist ein erstes Schutzrohr 30 auf; ein dritter Abschnitt 23 der druckfesten Kapselungsvorrichtung 2 weist ein zweites Schutzrohr 35 auf. Die Drehachse 5 verläuft durch einen Durchgang 24 des ersten Schutzrohrs 30, wobei sich der Rotor 4 außerhalb des Durchgangs 24 abstützt. Die erste Lagervorrichtung 18 weist hierzu ein Lager 78 auf, das von außerhalb der druckfesten Kapselungsvorrichtung 2 für ein Auswechseln des Lagers 8 zugänglich ist. Das Lager 78 ist auf einer dem ersten axialen Ende 701 abgewandten Seite der ersten Lagervorrichtung 18 mit einem Lagerdeckel 25 außerhalb des Durchgangs 24 fixiert. Das Lager 78 ist ein Wälzlager. Vorteilhaft kostengünstig kann das Lager 78 nach dem Zusammenbauen der druckfesten Kapselungsvorrichtung 2 bzw. ohne diese Zerlegen zu müssen an der elektrischen Maschine 1 befestigt werden. Der Rotor 4 ist an der Welle 40 befestigt, über die er sich außerhalb des Durchgangs 24 an dem Lager 78 abstützt. Das erste Schutzrohr 30 weist an seinem ersten axialen Ende, das von dem Blechpaket 8 abgewandt ist, eine axiale Berandung 74 auf, die sich in radialen Richtungen 37 zum Durchgang 24 erstreckt. Die radialen Richtung 37 verlaufen senkrecht zu der axialen Richtung 3. Ein erstes Lagerschild 31 der elektrischen Maschine 1 umfasst das erste Schutzrohr 30 und die erste Lagervorrichtung 18. Das erste Lagerschild 31 weist eine Zentriervorrichtung 32 zum Einstellen von Spalten 33 am Durchgang 24 auf. Außerdem bildet die Zentriervorrichtung 32 mit dem Endring 20 an dem ersten axialen Ende 701 des Stators 70 Spalte 26, 27 aus. Diese Spalte 26, 27 sind zwischen dem ersten Lagerschild 31 und einem Vorsprung 28 des Endrings 20 vorhanden. Die Spalte 26, 27 weisen die für eine entsprechende druckfeste Kapselung notwendigen Spaltlängen und Spaltweiten auf. Beim Aufsetzen des ersten Lagerschildes 31 und Befestigen des ersten Lagerschildes 31 an dem ersten Abschnitt 21 über den Endring 20 nimmt das erste Lagerschild 31 eine durch die Zentriervorrichtung 32 vorgegebene Position ein, so dass sich die notwendigen Maße der Spalte vorteilhaft für eine druckfeste Kapselung einstellen. Die Zentriervorrichtung 32 wirkt hierfür mit dem Vorsprung 28 zusammen.

Bei dem Ausführungsbeispiel gemäß FIG 1 können vorteilhaft die Welle 40, das erste Lagerschild 31 als erstes Schutzrohr, das Blechpaket 8 mit Endringen 20 und ein zweites Lagerschild als zweites Schutzrohr die Kapselungsvorrichtung 2 bilden. Die zweite Lagervorrichtung 19 umfasst dabei ein zweites Schutzrohr 35, das entsprechend dem ersten Schutzrohr 30 aufgebaut ist. Weitere Bestandteile des zweiten Lagerschilds sind entsprechend den weiteren Bestandteilen des ersten Lagerschilds 31 ausgeführt, wobei ein Lagerdeckel des zweiten Lagerschilds einen Durchgang an dem zweiten Schutzrohr 35 verschließt, da dort die Welle 40 von außen nicht zugänglich sein muss. Das erste Schutzrohr 30 und das zweite Schutzrohr 35 weisen Füße 34, 36 auf, die zum Aufstellen der elektrischen Maschine 1 in einem explosionsgefährdeten Bereich dienen. Durch die Kapselungsvorrichtung 2 gemäß dem Ausführungsbeispiel der FIG 1 kann vorteilhaft kostengünstig in einer hohen Qualität auf ein geschlossenes druckfestes Gehäuse verzichtet werden.

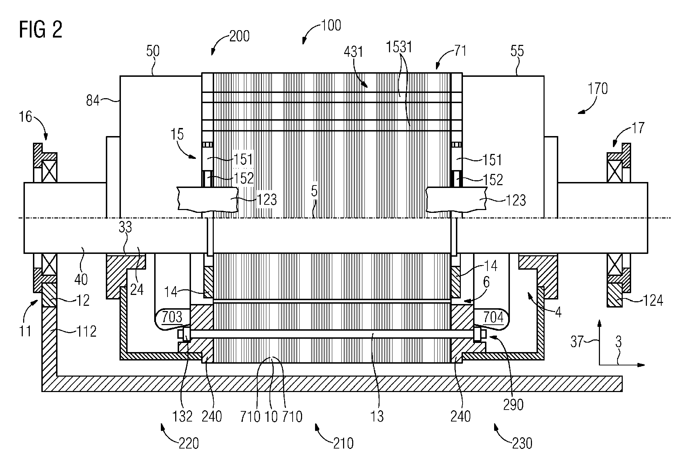

Die FIG 2 bis FIG 5 zeigen jeweils kombinierte Darstellungen der Ausführungsbeispiele, die oberhalb der Drehachse 5 eine Teilansicht des entsprechenden Ausführungsbeispiels und unterhalb der Drehachse 5 einen Teilschnitt des entsprechenden Ausführungsbeispiels zeigen.

FIG 2 zeigt ein zweites Ausführungsbeispiel einer druckfest gekapselten elektrischen Maschine 100. Die druckfest gekapselte elektrische Maschine 100 umfasst eine druckfeste Kapselungsvorrichtung 200 und ein Blechpaket 71, wobei das Blechpaket 71 in einer axialen Richtung 3 geschichtete Bleche 710 aufweist. Das Blechpaket 710 bildet einen ersten Abschnitt 210 der druckfesten Kapselungsvorrichtung 200. Das Blechpaket 710 weist eine Verbindungsvorrichtung 290 auf, die die Bleche 710 im Blechpaket 71 fixiert, wobei jeweils in axialer Richtung 3 benachbarte Bleche 710 durch den Backlack 10 miteinander verklebt sind. Die Verbindungsvorrichtung 290 weist ein Versteifungselement 13 auf. In dem Ausführungsbeispiel gemäß FIG 2 ist das Versteifungselement 13 ein Zuganker, der in axialer Richtung 3 durch das Blechpaket 71 verläuft und der an seinen beiden Enden ein Gewinde aufweist, auf dem Muttern 132 aufgeschraubt sind, so dass die Bleche 710 durch eine Kraft aneinander gepresst werden. Die Verbindungsvorrichtung 290 weist um die Drehachse 5 gleichmäßig im Blechpaket 71 verteilt mehrere Versteifungselemente 13 auf, um ein gleichmäßiges Zusammenpressen der Bleche 710 zu ermöglichen. In dem Ausführungsbeispiel gemäß der FIG 2 kann so in einem explosionsgefährdeten Bereich mit höheren Anforderungen, z.B. die, die einer Explosionsgruppe IIB der IEC 60079 entsprechen, das Blechpaket 71 vorteilhaft den ersten Abschnitt 210 der druckfesten Kapselungsvorrichtung 200 bilden. Ein zweiter Abschnitt 220 der druckfesten Kapselungsvorrichtung 200 weist ein erstes Schutzrohr 50 auf und ein dritter Abschnitt 230 der druckfesten Kapselungsvorrichtung 200 weist ein zweites Schutzrohr 55 auf. Das zweite Schutzrohr 55 ist entsprechend dem ersten Schutzrohr 50 ausgebildet. Das erste und das zweite Schutzrohr 50 und 55 haben in radialen Richtung 37 eine geringere Erstreckung als das Blechpaket 71. Das Blechpaket 71 und Endringe 240, die an den axialen Enden des Blechpakets 71 angebracht sind, weisen Ausnehmungen auf, die in axialer Richtung 3 verlaufende Kanäle 1531 zur Kühlung der elektrischen Maschine 100 bilden. Die elektrische Maschine 100 weist den Rotor 4 auf, der sich im Betrieb der elektrischen Maschine 100 um die Drehachse 5 dreht, wobei diese durch einen Durchgang 24 des ersten Schutzrohrs 50 verläuft, wobei sich der Rotor 4 außerhalb des Durchgangs 24 abstützt. Das erste Schutzrohr 50 weist an seinem ersten axialen Ende, das von dem Blechpaket 71 abgewandt ist, eine axiale Berandung 84 auf, die sich in radialen Richtungen 37 zum Durchgang 24 erstreckt. Die druckfeste Kapselungsvorrichtung 200 weist eine Fixiervorrichtung 15 auf, wobei das Blechpaket 71 sich im Betrieb der elektrischen Maschine 100 über die Fixiervorrichtung 15 abstützt, wobei die Fixiervorrichtung 15 eine Einstellvorrichtung 152 aufweist. In dem Ausführungsbeispiel gemäß der FIG 2 weist die Fixiervorrichtung 15 vier Einstellvorrichtungen 152 auf. Das Blechpaket 71 stützt sich im Betrieb der elektrischen Maschine 100 über die Fixiervorrichtung 15 an den axialen Enden des Blechpakets 71 über Fixiereinheiten 151 ab. In dem Ausführungsbeispiel der FIG 2 sind die Fixiereinheiten 151 einstückig mit den Endringen 240 verbunden. Des Weiteren weist jeder Endring 240 zwei Fixiereinheiten 151 auf. Somit weist die Fixiervorrichtung 15 vier Fixiereinheiten 151 auf, wobei das Blechpaket 71 mit den Fixiereinheiten 151 gegen eine Bewegung um die Drehachse 5 in einem Betrieb der elektrischen Maschine 100 fixiert ist und die vier Fixiereinheiten 151 jeweils eine der vier Einstellvorrichtung 152 zum Einstellen des Luftspalts durch ein Verändern der Position des an einem Rahmen 12 fixierten Blechpakets 71 gegenüber dem Rahmen 12 aufweisen. In dem Ausführungsbeispiel gemäß FIG 2 ist das Blechpaket 71 über die Fixiervorrichtung 15 mit den Fixiereinheiten 151 am Rahmen 12 befestigt, insbesondere an einem ersten axialen Rahmenteil 123. Das Ausführungsbeispiel der FIG 2 ermöglicht so, dass bei einer elektrischen Maschine 1 gemäß FIG 1 der Patentanmeldung (nachfolgend PA-FIG 1 abgekürzt) mit dem Internationalen Aktenzeichen PCT/EP2014/053023 anstelle einer zusammengesetzten Einheit, die den Stator 7 gemäß PA-FIG 1 und den Rotor 4 PA-FIG 1 umfasst, eine zusammengesetzte Einheit mit der Kapselungsvorrichtung 200 in die elektrische Maschine 1 gemäß PA-FIG 1 der Hülle 11 gemäß PA-FIG 1 eingesetzt wird. Bei der elektrischen Maschine 100 gemäß der FIG 2, bei der die erste Lagervorrichtung 16 nicht an dem zweiten Abschnitt 220, insbesondere dem ersten Schutzrohr 50, befestigt ist, kann so zum Einstellen von Spalten 33 an dem Durchgang 24 vorteilhaft kostengünstig in einer hohen Qualität die Einstellvorrichtung zum Einstellen des Luftspalts 6 durch ein Verändern der Position eines an dem Rahmen 12 fixierten Stators 170, gegenüber dem Rahmen 12 verwendet werden. Der Stator 170 weist das Blechpaket 71 auf. Die elektrische Maschine 100 gemäß FIG 2 umfasst die Hülle 11, die eine Vorrichtung 112 aufweist, die die druckfesten Kapselungsvorrichtung 200 zumindest teilweise umgibt. Die Vorrichtung 112 ist in der Patentanmeldung mit dem Internationalen Aktenzeichen die zweite Vorrichtung 112 gemäß der PA-FIG 1. Die in FIG 2 vorhandenen nicht beschriebenen Bezugszeichen sind entsprechend der Patentanmeldung mit dem internationalen Aktenzeichen zu entnehmen.

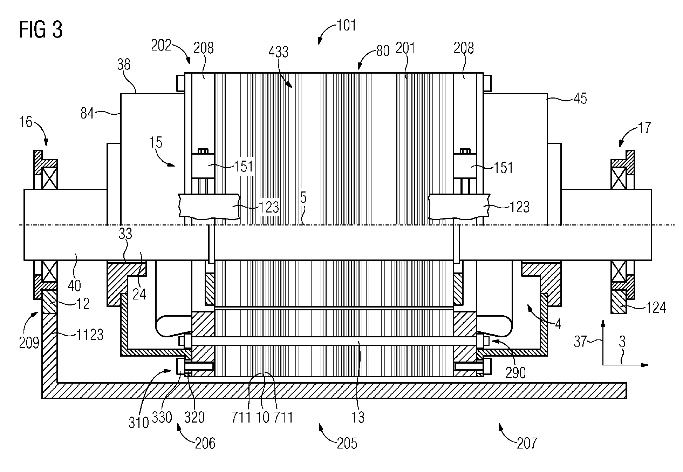

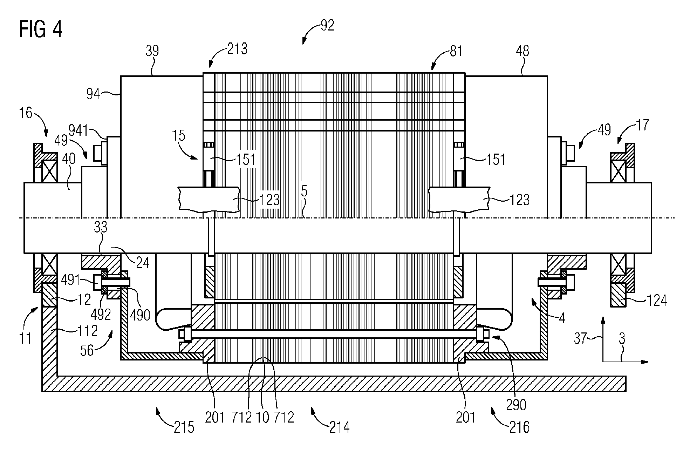

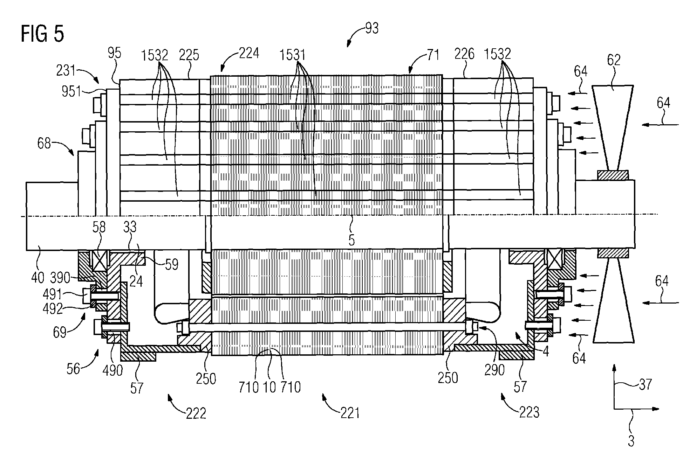

FIG 3 zeigt ein drittes Ausführungsbeispiel einer druckfest gekapselten elektrischen Maschine 101. Diese elektrische Maschine 101 umfasst eine druckfeste Kapselungsvorrichtung 202 und ein Blechpaket 80. Dieses weist in einer axialen Richtung 3 geschichtete Bleche 711 auf, wobei das Blechpaket 80 einen ersten Abschnitt 205 der druckfesten Kapselungsvorrichtung 202 bildet. Das Blechpaket 80 weist die Verbindungsvorrichtung 290 auf, die die Bleche 711 im Blechpaket 80 fixiert, wobei jeweils in einer axialen Richtung 3 benachbarte Bleche 711 durch den Backlack 10 miteinander verklebt sind. Ein zweiter Abschnitt 206 der druckfesten Kapselungsvorrichtung 202 weist ein erstes Schutzrohr 38 auf und ein dritter Abschnitt 207 der druckfesten Kapselungsvorrichtung 202 weist ein zweites Schutzrohr 45 auf. Das zweite Schutzrohr 45 ist entsprechend dem ersten Schutzrohr 38 ausgebildet. Das erste Schutzrohr 38 und das zweite Schutzrohr 45 weisen jeweils Einstellvorrichtungen 310 zum Einstellen von Spalten 33 am Durchgang 24 auf. Die Einstellvorrichtungen 310 weisen an dem ersten Schutzrohr 38 und an dem zweiten Schutzrohr 45 Langlöcher 320 auf, über die das erste Schutzrohr 38 und das zweite Schutzrohr 45 mittels in axialer Richtung 3 verlaufender Schrauben 330 an den Endringen 208 befestigt sind. Das erste Lagerschild 38 kann so bei der Herstellung der druckfest gekapselten elektrischen Maschine 101 mit den Schrauben 330 in radialen Richtungen 37 verschiebbar an den Endringen 202 fixiert werden. Hierzu werden Schrauben 330 verwendet, die zumindest in einer Richtung senkrecht zu der axialen Richtung 3 einen größeren Durchmesser als die Langlöcher 320 aufweisen. Zum Einstellen der Spalte 33 am Durchgang 24. z.B. im Rahmen einer erfindungsgemäßen Herstellung der elektrischen Maschine 101 wird das erste Schutzrohr 38 mindestens in einer Richtung senkrecht zu der axialen Richtung 3 verschoben, bis die Anforderungen an die Spaltweite der Spalte 33 z.B. entsprechend der Norm IEC 60079 erfüllt sind. Wenn die Spalte 33 am Durchgang 24, die durch die Welle 40 und das erste Schutzrohr 38 gebildet sind, z.B. über eine Länge von 25 mm eine maximale Spaltweite w aufweisen, so darf bei einer druckfest gekapselten elektrischen Maschine der Explosionsgruppe IIB die Spaltweite w höchstens 0,3 mm betragen. Neben der Anforderung, dass die Spaltweite w am gesamten Umfang der Welle 40 im Durchgang 24 diesen Wert nicht überschreiten darf, kann auch zusätzlich eine gleichmäßigere Spaltweite der Spalte 33 entlang des Umfangs 40 angestrebt werden. Nach dem Einstellen der Spalte 33 am Durchgang 24 werden die Schrauben 330 zur endgültigen Befestigung des ersten Schutzrohrs 38 angezogen. Bei entsprechender symmetrischer Anordnung der Langlöcher 320 an dem ersten Schutzrohr 38 kann dieses auch als zweites Schutzrohr 45 verwendet werden. So können vorteilhaft kostengünstig identisch aufgebaute Schutzrohre als erstes und als zweites Schutzrohr 38 und 45 verwendet werden. Die Bleche 711 weisen Ausnehmungen 201 auf, die in einer Ebene senkrecht zu der axialen Richtung 3 in tangentialen Richtungen verlaufen. Eine tangentiale Richtung verläuft senkrecht zu der axialen Richtung 3 und einer der radialen Richtungen, wobei die radiale Richtung 37 eine der radialen Richtungen ist. So kann vorteilhaft ein Kühlmittelstrom in einer tangentialen Richtung über die äußere Oberfläche 433 des Blechpakets 80 geführt werden, um die druckfest gekapselte elektrische Maschine 101 zu kühlen. Die Ausnehmungen 201 können so Teil einer Strömungsvorrichtung sein, die alternativ zu dem Ausführungsbeispiel gemäß FIG 1 einen Kühlmittelstrom in tangentialer Richtung über die äußere Oberfläche 433 der druckfest gekapselten elektrischen Maschine 101 führt, anstatt einen Kühlmittelstrom in axialer Richtung 3 über die äußere Oberfläche 430 der druckfest gekapselten elektrischen Maschine 1 zu führen. In dem Ausführungsbeispiel gemäß FIG 3 ist die druckfeste Kapselungsvorrichtung 202 eine zusammengesetzte Einheit, die anstelle einer zusammengesetzten Einheit mit dem Stator 740 und dem Rotor 54 gemäß FIG 4 bzw. FIG 5 der Patentanmeldung mit dem internationalen Aktenzeichen in die elektrische Maschine 101 eingesetzt wird. So wird eine druckfest gekapselte elektrische Maschine 101 anstelle einer elektrischen Maschine 103 gemäß FIG 4 bzw. 5 der Patentanmeldung mit dem internationalen Aktenzeichen hergestellt, wobei die druckfest gekapselte elektrische Maschine 101 eine Hülle 209 umfasst, die eine Vorrichtung 1123 aufweist, wobei die Vorrichtung 1123 die druckfeste Kapselungsvorrichtung 202 zumindest teilweise umgibt. Die Vorrichtung 1123 ist in der Patentanmeldung mit dem internationalen Aktenzeichen die zweite Vorrichtung 1123. Die Einstellvorrichtung 310 des ersten Schutzrohrs 38 trägt so zusätzlich vorteilhaft kostengünstig bei einer elektrischen Maschine, bei der eine erste Lagervorrichtung nicht an dem zweiten Abschnitt, insbesondere einem ersten Schutzrohr, befestigt ist, zu einem Einstellen des Luftspalts in hoher Qualität trotz der Anforderungen an die druckfeste Kapselungsvorrichtung bezüglich der Spaltweiten bei.

FIG 4 zeigt ein viertes Ausführungsbeispiel einer druckfest gekapselten elektrischen Maschine 92. Diese umfasst eine druckfeste Kapselungsvorrichtung 213 und ein Blechpaket 81. Das Blechpaket 81 weist in einer axialen Richtung 3 geschichtete Bleche 712 auf, wobei das Blechpaket 81 einen ersten Abschnitt 214 der druckfesten Kapselungsvorrichtung 213 bildet. Das Blechpaket 81 weist eine Verbindungsvorrichtung 290 auf, die die Bleche 712 im Blechpaket 81 fixiert, wobei jeweils in axialer Richtung 3 benachbarte Bleche 712 durch den Backlack 10 miteinander verklebt sind. Ein zweiter Abschnitt 215 der druckfesten Kapselungsvorrichtung 213 weist ein erstes Schutzrohr 39 auf und ein dritter Abschnitt 216 der druckfesten Kapselungsvorrichtung 213 weist ein zweites Schutzrohr 48 auf. Das erste Schutzrohr 39 weist eine Dichtvorrichtung 49 auf, wobei die Dichtvorrichtung 49 den Durchgang 24 aufweist, und wobei die Dichtvorrichtung 49 eine Einstellvorrichtung 56 zum Einstellen von Spalten 33 am Durchgang 24 aufweist. Die Dichtvorrichtung 49 umgibt die Welle 40 über eine Spaltlänge, die in der axialen Richtung 3 gemessen ist. Die Einstellvorrichtung 56 weist an der Dichtvorrichtung 49 Langlöcher 490 auf. Beim Herstellen der elektrischen Maschine 92 wird der Rotor 4 in das Blechpaket 81 eingeschoben und das erste Schutzrohr 39 an einem ersten axialen Ende des Blechpakets 81 an dem Endring 201 befestigt und das zweite Schutzrohr 48 an einem zweiten axialen Ende des Blechpakets 81 an einem weiteren Endring 201 befestigt. Anschließend werden Dichtvorrichtungen 49 an dem ersten Schutzrohr 39 und an dem zweiten Schutzrohr 48 verschiebbar mit den Unterlegscheiben 429 und den Schrauben 491 durch die Langlöcher 490 fixiert. Hierzu werden Unterlegscheiben 429 verwendet, die zumindest in einer Richtung senkrecht zu der axialen Richtung 3 einen größeren Durchmesser als die Langlöcher 490 aufweisen. Zum Einstellen der Spalte 33 am Durchgang 24. z.B. im Rahmen einer erfindungsgemäßen Herstellung der elektrischen Maschine 92 wird das die Dichtvorrichtung 49 mindestens in einer Richtung senkrecht zu der axialen Richtung 3 verschoben, bis die Anforderungen an die Spaltweite der Spalte 33 z.B. entsprechend der Norm IEC 60079 erfüllt sind. Nach dem Einstellen der Spalte 33 am Durchgang 24 werden die Schrauben 491 zur endgültigen Befestigung der Dichtvorrichtung 49 angezogen. Das erste Schutzrohr 39 weist an seinem ersten axialen Ende, das von dem Blechpaket 81 abgewandt ist, eine axiale Berandung 94 auf, die sich in radialen Richtungen 37 zum Durchgang 24 erstreckt, wobei die Dichtvorrichtung 49 einen Teil 941 der axialen Berandung 94 bildet. Das Ausführungsbeispiel der FIG 4 ermöglicht ebenfalls, dass bei einer elektrischen Maschine 1 gemäß FIG 1 der Patentanmeldung (nachfolgend PA-FIG 1 abgekürzt) mit dem Internationalen Aktenzeichen PCT/EP2014/053023 anstelle einer zusammengesetzten Einheit, die den Stator 7 gemäß PA-FIG 1 und den Rotor 4 PA-FIG 1 umfasst, eine zusammengesetzte Einheit mit der Kapselungsvorrichtung 213 in die elektrische Maschine 1 gemäß PA-FIG 1 der Hülle 11 gemäß PA-FIG 1 eingesetzt wird. Die Einstellvorrichtung 56 der Dichtvorrichtung 49 trägt so zusätzlich vorteilhaft kostengünstig bei einer elektrischen Maschine, bei der eine erste Lagervorrichtung nicht an dem zweiten Abschnitt, insbesondere einem ersten Schutzrohr, befestigt ist, zu einem Einstellen des Luftspalts in hoher Qualität trotz der Anforderungen an die druckfeste Kapselungsvorrichtung bezüglich der Spaltweiten bei. Die in FIG 4 vorhandenen nicht beschriebenen Bezugszeichen sind entsprechend der Patentanmeldung mit dem internationalen Aktenzeichen zu entnehmen.

FIG 5 zeigt ein fünftes Ausführungsbeispiel einer druckfest gekapselten elektrischen Maschine 93. Diese Maschine 93 umfasst eine druckfeste Kapselungsvorrichtung 224 und ein Blechpaket 71, wobei das Blechpaket 71 in einer axialen Richtung 3 geschichtete Bleche 710 aufweist. Das Blechpaket 71 bildet einen ersten Abschnitt 221 der druckfesten Kapselungsvorrichtung 224. Das Blechpaket 71 weist eine Verbindungsvorrichtung 290 auf, die die Bleche 710 im Blechpaket 71 fixiert, wobei jeweils in axialer Richtung 3 benachbarte Bleche 710 durch den Backlack 10 miteinander verklebt sind. Ein zweiter Abschnitt 222 der druckfesten Kapselungsvorrichtung 224 weist ein erstes Schutzrohr 225 auf, und ein dritter Abschnitt 223 der druckfesten Kapselungsvorrichtung 224 weist ein zweites Schutzrohr 226 auf. Das erste Schutzrohr 225 weist eine Dichtvorrichtung 59 auf, wobei die Dichtvorrichtung 59 den Durchgang 24 aufweist, wobei die Dichtvorrichtung 59 eine Einstellvorrichtung 56 zum Einstellen von Spalten 33 am Durchgang 24 aufweist. Die elektrische Maschine 93 weist ein erstes Lagerschild 231 auf, wobei dieses das erste Schutzrohr 225 und die erste Lagervorrichtung 68 umfasst. Die erste Lagervorrichtung 68 weist eine Einstellvorrichtung 69 zum Positionieren eines Lagers 58 relativ zur Drehachse 5 auf. Die erste Lagervorrichtung 68 weist das Lager 58 auf, das ein Wälzlager ist. Nach dem Einstellen der Spalte 33 am Durchgang 24 mit der Einstellvorrichtung 56 werden die Schrauben 491 zur endgültigen Befestigung der Dichtvorrichtung 49 angezogen (Das Einstellen der Spalte 33 am Durchgang 24 mit der Einstellvorrichtung 59 erfolgt wie bei der Einstellvorrichtung 49 im Zusammenhang mit dem Ausführungsbeispiel der FIG 4 beschrieben). Anschließend kann das Lager 58 relativ zur Drehachse 5 vorteilhaft unabhängiger von den Anforderungen an die druckfeste Kapselungsvorrichtung 224 an der Welle 40 und der Dichtvorrichtung 59 positioniert werden. So kann das Wälzlager so positioniert werden, dass die Wälzkörper des Wälzlagers vorteilhaft keiner schädigenden unspezifizierten Belastung ausgesetzt werden. Dies kann weiterhin dazu beitragen, dass eine druckfest gekapselte elektrische Maschine vorteilhaft kostengünstig in hoher Qualität zur Verfügung gestellt werden kann. Unter anderem können kostengünstigere Wälzlager verwendet werden oder die elektrische Maschine kann über einen längeren Zeitraum mit dem Wälzlager betrieben werden. Nach der endgültigen Befestigung der Dichtvorrichtung 58, wird das Lager 58 mit der Lagervorrichtung 68 verschiebbar mit Unterlegscheiben 429 und Schrauben 491 durch die Langlöcher 390 relativ zur Drehachse 5 positioniert. Hierzu werden Unterlegscheiben 429 verwendet, die zumindest in einer Richtung senkrecht zu der axialen Richtung 3 einen größeren Durchmesser als die Langlöcher 390 aufweisen. Nach dem die Positionierung gegebenenfalls noch einmal überprüft wurde, werden die Schrauben 491 zur endgültigen Befestigung der Lagervorrichtung 68 an der Dichtvorrichtung 59 angezogen. Das erste Schutzrohr 225 weist an seinem ersten axialen Ende, das von dem Blechpaket 71 abgewandt ist, eine axiale Berandung 95 auf, die sich in radialen Richtungen 37 zum Durchgang 24 erstreckt, wobei die Dichtvorrichtung 59 einen Teil der axialen Berandung 94 bildet. Das erste Schutzrohr 225 und das zweite Schutzrohr 226 weisen Füße 57 auf, die zum Aufstellen der elektrischen Maschine 93 in einem explosionsgefährdeten Bereich dienen. Durch die Kapselungsvorrichtung 224 gemäß dem Ausführungsbeispiel der FIG 5 kann vorteilhaft kostengünstig in einer hohen Qualität auf ein geschlossenes druckfestes Gehäuse verzichtet werden. Zur Kühlung der elektrischen Maschine 93 sind die in axialer Richtung 3 verlaufenden Kanäle 1531 in Kanälen 1532 des ersten Lagerschilds 225 und des zweiten Lagerschilds 226 fortgesetzt. Die Bleche 710 und das erste Lagerschild 225 sowie das zweite Lagerschild 226 weisen in einer Ebene senkrecht zu der axialen Richtung 3 eine kreisförmige Grundform auf. Die Welle 40 versetzt im Betrieb der elektrischen Maschine 93 einen Lüfter 62 in eine Drehbewegung um die Drehachse 5. Der Lüfter 62 kann so in Richtungen 64 einen Kühlmittelstrom durch die in axialer Richtung 3 verlaufenden Kanäle 1531 und 1532 zur Kühlung der elektrischen Maschine 93 fördern.

Bei einem Ausführungsbeispiel eines Verfahrens zur Herstellung einer druckfest gekapselten elektrischen Maschine 101 wird die druckfeste Kapselungsvorrichtung 202 mit dem Blechpaket 80 als ersten Abschnitt 205 hergestellt. Desweiteren sind Schritte wie sie im Zusammenhang mit der FIG 3 beschrieben sind bei Bedarf durchführbar.

Bei entsprechenden weiteren Ausführungsbeispielen eines Verfahrens zur Herstellung einer druckfest gekapselten elektrischen Maschine 1,92,93,100 wird die druckfeste Kapselungsvorrichtung 2,200,213,224 mit dem Blechpaket 8,71,81 als ersten Abschnitt 21,210,214,221 hergestellt. Desweiteren sind Schritte wie sie im Zusammenhang mit den FIG 1,2,4,5 beschrieben sind bei Bedarf durchführbar. Dabei wird die Welle 40 vor einer ausreichend stabilen Lagerung der Welle 40 in einer Position entlang der Drehachse 5 in dieser Position für das Einstellen der Spalte 33 und gegebenenfalls für das Fixieren oder Befestigen Lagervorrichtung 16,17,18,19 bzw. Lager 58,78 hilfsweise außerhalb der druckfesten Kapselungsvorrichtung 2,200,202,213,224 fixiert, z.B. durch eine entsprechend einstellbare Herstellungsvorrichtung. Wenn die Lagervorrichtung 16,17,18,19 bzw. Lager 58,78 ausreichend fixiert oder befestigt sind, können diese alleine für eine ausreichend stabile Lagerung der Welle 40 sorgen.

Dabei wird die Welle 40 vor einer ausreichend stabilen Lagerung der Welle 40 in einer Position entlang der Drehachse 5 durch die Lagervorrichtung 16,17,18,19 bzw. Lager 58,78 in der vorgesehen Position für das Einstelen der Spalte

Bei einem Ausführungsbeispiel zur Verwendung eines Backlacks 10 zur druckfesten Kapselung einer druckfest gekapselten elektrischen Maschine 1 werden jeweils in axialer Richtung 3 benachbarte Bleche 7 für den ersten Abschnitt 21 der druckfesten Kapselungsvorrichtung 2 mit einem Backlack 10 miteinander verklebt.

Ein weiteres Ausführungsbeispiel für eine Verwendung eines Backlacks 10 zur druckfesten Kapselung der druckfest gekapselten elektrischen Maschine 1 umfasst die Verfahrensschritte:
- Ausstanzen der mit Backlack 10 beschichteten Bleche 7 oder Ausstanzen der Bleche 7 und Beschichten dieser mit einem Backlack 10,
- Aufstapeln der Bleche 7 zum Blechpaket 8,
- Anbringen der Verbindungsvorrichtung 29, und
- Verkleben der Bleche 7 durch Erhitzen.

In einem Ausführungsbeispiel für eine Verwendung von in axialer Richtung 3 benachbarten mit Backlack 10 verklebten Blechen 7 zur druckfesten Kapselung einer druckfest gekapselten elektrischen Maschine 1 werden die verklebten Bleche 7 für den ersten Abschnitt 21 der druckfesten Kapselungsvorrichtung 2 verwendet.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

So wäre beispielsweise auch denkbar, anstatt des Verklebens der Bleche durch Erhitzen eine andere Backlack-Technik zu verwenden, wie z.B. das Verbacken der Bleche durch Lösungsmittel anstatt durch Erhitzen, wobei in diesen Fällen nicht alle Vorteile der Erfindung erreicht werden müssen.

## Patentansprüche

1. Druckfest gekapselte elektrische Maschine (1,92,93,100, 101), umfassend
- eine druckfeste Kapselungsvorrichtung (2,200,202,213,224), und
- ein Blechpaket (8,71,80,81),
- wobei das Blechpaket (8,71,80,81) in einer axialen Richtung (3) geschichtete Bleche (7,710,711,712) aufweist,
- wobei das Blechpaket (8,71,80,81) einen ersten Abschnitt (21,205,210,214,221) der druckfesten Kapselungsvorrichtung (2,200,202,213,224) bildet,
- wobei das Blechpaket (8,71,80,81) eine Verbindungsvorrichtung (29,290) aufweist, die die Bleche (7,710,711,712) im Blechpaket (8,71,80,81) fixiert,
- wobei jeweils in axialer Richtung (3) benachbarte Bleche (7,710,711,712) durch einen Backlack (10) miteinander verklebt sind.

2. Druckfest gekapselte elektrische Maschine (1,92,93,100, 101) nach Anspruch 1, wobei die Verbindungsvorrichtung (29, 290) aus Schweißnähten (9) besteht.

3. Druckfest gekapselte elektrische Maschine (1,92,93,100, 101) nach Anspruch 1 oder 2, wobei die Verbindungsvorrichtung (290) ein Versteifungselement (13) aufweist.

4. Druckfest gekapselte elektrische Maschine (1,92,93,100, 101) nach einem der vorhergehenden Ansprüche, wobei ein zweiter Abschnitt (22,206,215,220,222) der druckfesten Kapselungsvorrichtung (2,200,202,213,224) ein erstes Schutzrohr (30,38,39,50,225) aufweist, und ein dritter Abschnitt (23,207,216,223,230) der druckfesten Kapselungsvorrichtung (2,200,202,213,224) ein zweites Schutzrohr (35,45,48,55,226) aufweist.

5. Druckfest gekapselte elektrische Maschine (1,92,93,100, 101) nach Anspruch 4, wobei die elektrische Maschine (1,92, 93,100,101) einen Rotor (4) aufweist, der sich in einem Betrieb der elektrischen Maschine (1,92,93,100, 101) um eine Drehachse (5) dreht, wobei die Drehachse (5) durch einen Durchgang (24) des ersten Schutzrohrs (30,38,39,50,225) verläuft, wobei sich der Rotor (4) außerhalb des Durchgangs (24) abstützt.

6. Druckfest gekapselte elektrische Maschine (1,92,93,100, 101) nach Anspruch 4 oder 5, wobei ein erstes Lagerschild (31,231) der elektrischen Maschine (1,92,93,100, 101) das erste Schutzrohr (30,38,39,50,225) und eine erste Lagervorrichtung (18,68) umfasst.

7. Druckfest gekapselte elektrische Maschine (1,92,93,100, 101) nach Anspruch 6, wobei das erste Lagerschild (31,231) eine Zentriervorrichtung (32) zum Einstellen von Spalten (33) am Durchgang (24) aufweist.

8. Druckfest gekapselte elektrische Maschine (1,92,93,100, 101) nach einem der Ansprüche 1 bis 6, wobei die druckfeste Kapselungsvorrichtung (2,200,202,213,224) eine Fixiervorrichtung (15) aufweist, wobei sich das Blechpaket (8,71,80,81) in einem Betrieb der elektrischen Maschine (1,92,93,100,101) über die Fixiervorrichtung (15) abstützt, wobei die Fixiervorrichtung (15) eine Einstellvorrichtung (152) aufweist.

9. Druckfest gekapselte elektrische Maschine (1,92,93,100, 101) nach einem der Ansprüche 1 bis 6 oder 8, wobei das erste Schutzrohr (30,38,39,50,225) eine Einstellvorrichtung (310) zum Einstellen von Spalten (33) am Durchgang (24) aufweist.

10. Druckfest gekapselte elektrische Maschine (1,92,93,100, 101) nach einem der Ansprüche 1 bis 8, wobei das erste Schutzrohr (30,38,39,50,225) eine Dichtvorrichtung (49,59) aufweist, wobei die Dichtvorrichtung (49,59) den Durchgang (24) aufweist, wobei die Dichtvorrichtung (49,59) eine Einstellvorrichtung (56) zum Einstellen von Spalten (33) am Durchgang (24) aufweist.

11. Druckfest gekapselte elektrische Maschine (1,92,93,100, 101) nach einem der Ansprüche 6 bis 10, wobei die erste Lagervorrichtung (18,68) eine Einstellvorrichtung (69) zum Positionieren eines Lagers (58) relativ zur Drehachse (5) aufweist.

12. Druckfest gekapselte elektrische Maschine (1,92,93,100, 101) nach einem der vorhergehenden Ansprüche, wobei die elektrische Maschine (1,92,93,100,101) eine Hülle (11,209) umfasst, die eine Vorrichtung (112,1123) aufweist, wobei die Vorrichtung (112,1123) die druckfeste Kapselungsvorrichtung (2,200,202,213,224) zumindest teilweise umgibt.

13. Verfahren zur Herstellung einer druckfest gekapselten elektrischen Maschine (1,92,93,100,101) nach einem der Ansprüche 1 bis 12, wobei die druckfeste Kapselungsvorrichtung (2,200,202,213,214) mit dem Blechpaket (8,71,80,81) als ersten Abschnitt (21,205,210,214,221) hergestellt wird.

14. Verwendung eines Backlackes (10) zur druckfesten Kapselung einer druckfest gekapselten elektrischen Maschine (1,92,93,100,101) nach einem der Ansprüche 1 bis 12, wobei jeweils in axialer Richtung (3) benachbarte Bleche (7,710,711,712) für den ersten Abschnitt (21,205,210,214,221) der druckfesten Kapselungsvorrichtung (2,200,202,213,224) mit einem Backlack (10) miteinander verklebt werden.

15. Verwendung von in axialer Richtung (3) benachbarten mit Backlack (10) verklebten Blechen (7,710,711,712) zur druckfesten Kapselung einer druckfest gekapselten elektrischen Maschine (1,92,93,100,101) nach einem der Ansprüche 1 bis 12, wobei die verklebten Bleche (7,710,711,712) für den ersten Abschnitt (21,205,210,214,221) der druckfesten Kapselungsvorrichtung (2,200,202,213,224) verwendet werden.
